# EUROPEAN PATENT APPLICATION

(11) **EP 4 036 043 A1**
(43) Date of publication of application: **03.08.2022**
(21) Application number: 20869086.7
(22) Date of filing: 21.04.2020
(51) Int. Cl.: B66B 11/02

(54) **EASY-TO-INSTALL ELEVATOR FRAME**

(30) Priority: 25.09.2019 CN 201910907926
(71) Applicant: Suzhou Bow Intelligence Technology Co., Ltd., Wuzhong Suzhou, Jiangsu 215000 (CN)
(72) Inventor: YU, Sheng, Suzhou, Jiangsu 215000 (CN)
(74) Representative: Sánchez Margareto, Carolina
(86) International application number: PCT/CN2020/085859
(87) International publication number: WO 2021/057016

(57) **Abstract**

The present disclosure relates to the technical field of elevators, and in particular, an installation-facilitated elevator framework, including pillars and cross beams. Four cross beams are arranged at joints of the upper and lower pillars; the pillars are vertical corner profiles; each vertical corner profile includes two vertical sections that are perpendicular to each other and a bent section that connects the two vertical sections; connection slots are arranged inside the bent sections; and the upper and lower pillars are located through locating columns in the connection slots. In the present disclosure, by means of disposing the locating columns and the connection slots, the locating columns are inserted into the connection slots, so as to locate the upper and lower pillars and facilitate the installation; by means of disposing fixed beds, clamping slots are formed on the fixed beds, and threading components fasten wires in the fixed beds through the clamping slots; the fixed beds are flat and straight to facilitate perforation; included angles between the fixed beds and the vertical sections are 45 degrees, so that the locking columns can be conveniently threaded into the connection slots; the fixed beds can be used as, on one hand, accommodating cavities to facilitate installation of the wires, and can be used as, on the other hand, fixing cavities; and the locating columns are fixed through the locking columns, so that the design is ingenious.

## Description

### TECHNICAL FIELD

The present disclosure relates to the technical field of elevators, and in particular, an installation-facilitated elevator framework.

### BACKGROUND

An elevator framework includes pillars and cross beams, and the pillars and the cross beams are encircled to form the elevator framework. The elevator framework is an indispensable component of an elevator. However, during assembling, upper and lower pillars of the exiting elevator are located only in a resisting manner, so that the upper and lower pillars of the elevator framework shake easily and are inconvenient to install.

Therefore, it is necessary to provide a new technical solution to overcome the above-mentioned deficiencies.

### SUMMARY

The present disclosure is directed to provide an installation-facilitated elevator framework to effectively solve the above technical problems.

In order to achieve the objective of the present disclosure, the following technical solution is adopted:

An installation-facilitated elevator framework includes a plurality of upper and lower pillars connected to each other and arranged at four corners, and cross beams perpendicularly connected to two adjacent pillars and arranged at joints of the upper and lower pillars. Four cross beams are arranged at the joints of the upper and lower pillars; the pillars are vertical corner profiles; each vertical corner profile includes two vertical sections that are perpendicular to each other and a bent section that connects the two vertical sections; a connection slot is arranged inside the bent section; the upper and lower pillars are located by locating columns arranged in the connection slots; and the connection slots fix the locating columns in a vertical direction.

Further, the inner sides of the bent sections of the vertical corner profiles are provided with fixed beds; the fixed beds are flat and straight, and have included angles of 45 degrees to the vertical sections; the locating columns are located in the vertical directions of the connection slots through the locking columns passing through the fixed beds, so that the locating columns are inserted into the connection slots of the lower pillar, and extend out of the connection slots to be inserted into the connection slots of the upper pillar.

Further, the fixed beds are sunken at the bent sections towards the inner side to form clamping slots provided with bayonets at two sides, and threading components are fastened on the clamping slots by means of cooperation between clamping claws on two sides and the bayonets.

Further, two sides of the inner sides of the vertical sections of the vertical corner profile are provided with vertical fixing plate slots; the inner sides of the cross beams are provided with horizontal fixing plate slots; fixing plates are inserted into the vertical fixing plate slots and the horizontal fixing plate slots; screw holes are formed in the fixing plates; connection corner fittings are connected with the screw holes of the fixing plates going deep into the vertical fixing plate slots and the horizontal fixing plate slots, so that the cross beams on both sides and the upper and lower pillars are connected together.

Further, cavities are formed in the cross beams; the cavities are located on the front sides of the horizontal fixing plate slots; bolts in the cavities are connected with connection sheets; and the end portions of the connection sheets are fixedly connected with the vertical corner profiles through screws.

Further, the pillars and the cross beams are connected to form an elevator framework; a board is embedded on the elevator framework; the board is located on the outer side of the elevator framework; fixing slots are formed in the outer side surfaces of the cross beams; the insides of the fixing slots are detachably connected with T-shaped fixing pieces for fixing the end portion of the board in a height direction; one end of each T-shaped fixing piece is inserted into each fixing slot, and the other two ends press and cover the end portion of the board in a horizontal direction; the pillars are detachably connected with battens for fixing the end portion of the board in a width direction; one end of each batten is fixedly connected with each pillar, and the other end of the batten presses and covers the end portion of the board in the width direction.

Further, the pillars and the cross beams are connected to form an elevator framework; a board is embedded on the elevator framework; when the board is located on the inner side of the elevator framework, two sides of the horizontal fixing plate slots of the cross beams are provided with cross beam clamping bar bayonets; the outer sides of the vertical fixing plate slots of the vertical corner profiles are provided with pillar clamping bar bayonets; the insides of the cross beam clamping bar bayonets and the pillar clamping bar bayonets are all fastened with installation clamping bars; the sides, opposite to the board 3, of the installation clamping bars are provided with fixing bayonets in which flexible bars for fixing the board are fastened; the flexible bars resist against the board.

Further, the pillars are detachably connected with pillar cover plates; the pillar cover plates are divided into bent section cover plates and vertical section cover plates; the bent section cover plates are detachably connected with the vertical section cover plates; the bent section cover plates are connected with the bent sections of the vertical corner profiles; and the vertical section cover plates are connected with the vertical sections of the vertical corner profiles.

Further, the cross beams are detachably connected with cross beam cover plates.

Compared with the prior art, the present invention has the following beneficial effects.
1. According to the installation-facilitated elevator framework of the present disclosure, by means of disposing the locating columns and the connection slots, the locating columns are inserted into the connection slots, so as to locate the upper and lower pillars and facilitate the installation; by means of disposing the fixed beds, the clamping slots are formed on the fixed beds, and the threading components fasten wires in the fixed beds through the clamping slots, so that routing is facilitated; the fixed beds are flat and straight, and have the included angles of 45 degrees to the vertical sections; the locating columns are located in the vertical directions of the connection slots through the locking columns passing through the fixed beds; the fixed beds are flat and straight to facilitate perforation; the included angles between the fixed beds and the vertical sections are 45 degrees, so that the locking columns can be conveniently threaded into the connection slots; the fixed beds can be used as, on one hand, accommodating cavities to facilitate installation of the wires, and can be used as, on the other hand, fixing cavities; and the locating columns are fixed through the locking columns, so that the design is ingenious.
2. According to the installation-facilitated elevator framework of the present disclosure, two sides of the inner sides of the vertical sections of the pillars are provided with vertical fixing plate slots; the inner sides of the cross beams are provided with horizontal fixing plate slots; fixing plates are inserted into the vertical fixing plate slots and the horizontal fixing plate slots; screw holes are formed in the fixing plates; connection corner fittings are connected with the screw holes of the fixing plates going deep into the vertical fixing plate slots and the horizontal fixing plate slots, so that the cross beams on both sides and the upper and lower pillars are connected together; the bolts realize fastening outside the profiles; the previous fastening inside the profiles is changed, so that the operation space is large, and the installation is convenient.
3. According to the installation-facilitated elevator framework of the present disclosure, the connection sheets are arranged on the cross beams; and the connection sheets are inserted into the cavities, and the other ends are connected with the pillars through bolts, so that the installation is convenient.
4. According to the installation-facilitated elevator framework of the present disclosure, the pillars are detachably connected with the pillar cover plates, and the cross beams are detachably connected with the cross beam cover plates, so as to form protection to the pillars and the cross beams.

### BRIEF DESCRIPTION OF THE DRAWINGS

Fig. 1 is a structural schematic diagram of an elevator framework of the present disclosure;
Fig. 2 is a structural schematic diagram of a portion of an installation-facilitated elevator framework of the present disclosure.
Fig. 3 is an enlarged schematic diagram of a portion A in Fig. 2;
Fig. 4 is an enlarged schematic diagram of a portion B in Fig. 2;
Fig. 5 is an enlarged schematic diagram of a portion C in Fig. 2;
Fig. 6 is a top view of another portion of an installation-facilitated elevator framework of the present disclosure;
Fig. 7 is a structural schematic diagram showing that a board of an installation-facilitated elevator framework of the present disclosure is located on the inner side of the elevator framework;
Fig. 8 is a structural schematic diagram showing, from another angle, that a board of an installation-facilitated elevator framework of the present disclosure is located on the inner side of the elevator framework;
Fig. 9 is a structural schematic diagram showing that a board of an installation-facilitated elevator framework of the present disclosure is located on the outer side of the elevator framework;
Fig. 10 is a structural schematic diagram showing, from another angle, that a board of an installation-facilitated elevator framework of the present disclosure is located on the outer side of the elevator framework.

In the drawings: 1: pillar; 2: cross beam; 3: board; 4: batten; 5: installation clamping bar; 10: vertical section; 101: vertical fixing plate slot; 102: pillar clamping bar bayonets; 11: bent section; 12: connection slot; 13: locating column; 14: fixed bed; 15: clamping slot; 16: fixing plate; 161: connection corner fitting; 17: pillar cover plate; 171: bent section cover plate; 172: vertical section cover plate; 21: horizontal fixing plate slot; 211: cross beam clamping bar bayonet; 212: fixing slot; 22: cavity; 23: connection sheet; 24: cross beam cover plate; 50: fixing bayonet; and 51: flexible bar.

### DESCRIPTION OF THE EMBODIMENTS

In the description of the present disclosure, it should be understood that orientations or positional relationships indicated by the terms "center", "transverse", "longitudinal", "front", "rear", "left", "right", "upper", "lower", "upright", "horizontal", "top", "bottom", "inside", "outside" and the like are orientations or positional relationships as shown in the drawings, and are only for the purpose of facilitating and simplifying the description of the present disclosure instead of indicating or implying that devices or elements indicated must have particular orientations, and be constructed and operated in the particular orientations, so that these terms are not construed as limiting the protection scope of the present disclosure. When a component is referred to as "being fixed to" another component, it can be directly on the other component or an intermediate component may also be present. When one component is considered to be "connected" to another component, it can be directly connected to the other component or an intermediate component may be present at the same time. When one component is considered to be "disposed" on another component, it can be directly disposed on the other component or an intermediate component may be present at the same time. The terms "vertical", "horizontal", "left", "right" and similar representations used herein are only for the purpose of illustration.

An installation-facilitated elevator framework of the present disclosure will be clearly and completely described below in conjunction with the accompanying drawings.

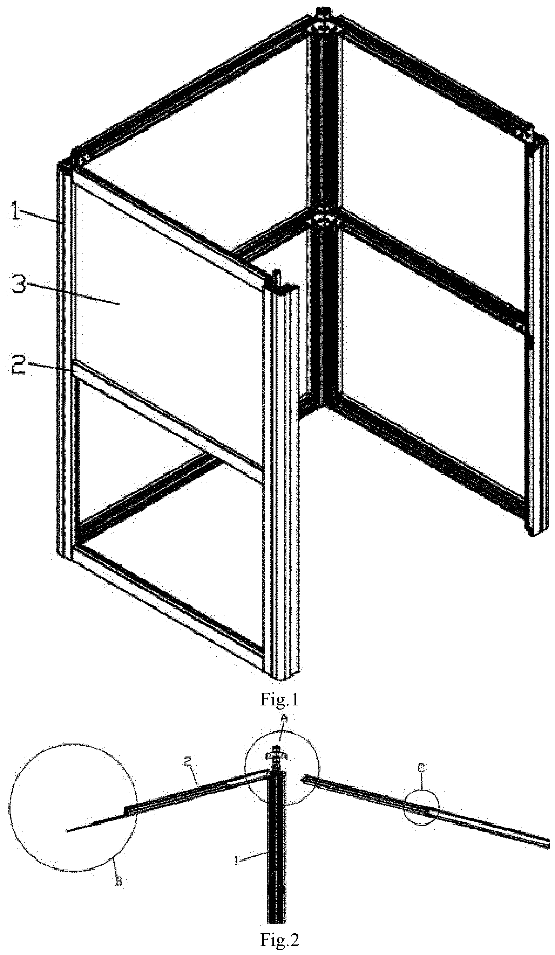

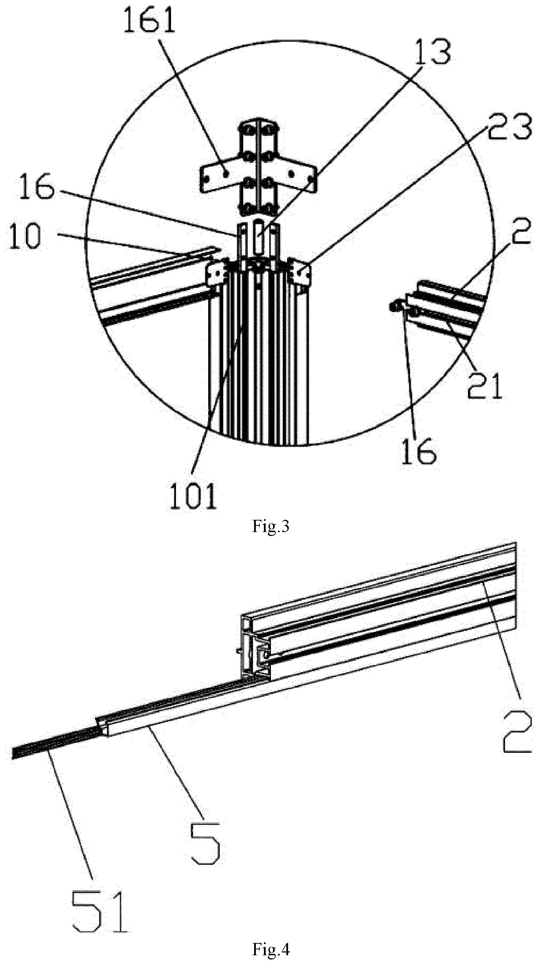

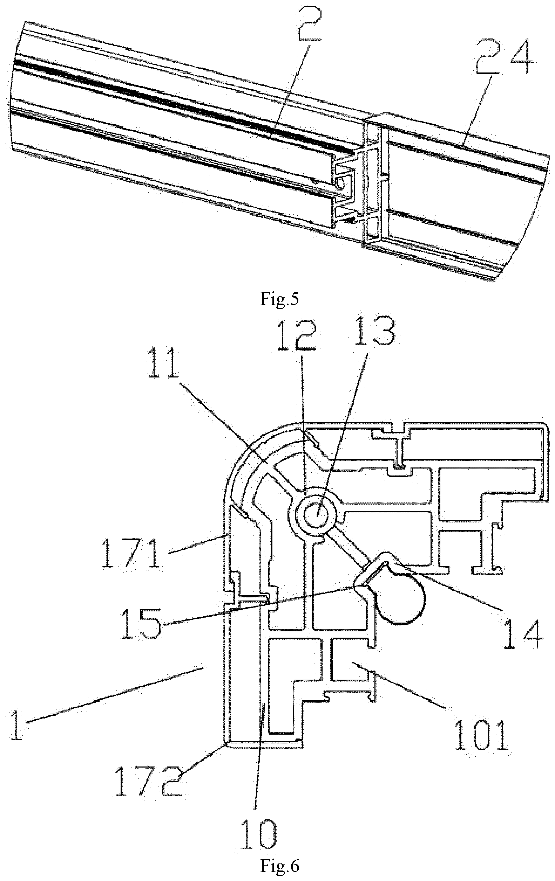

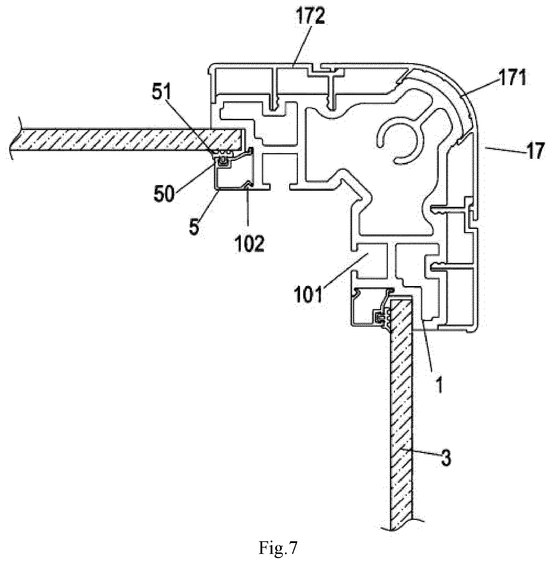

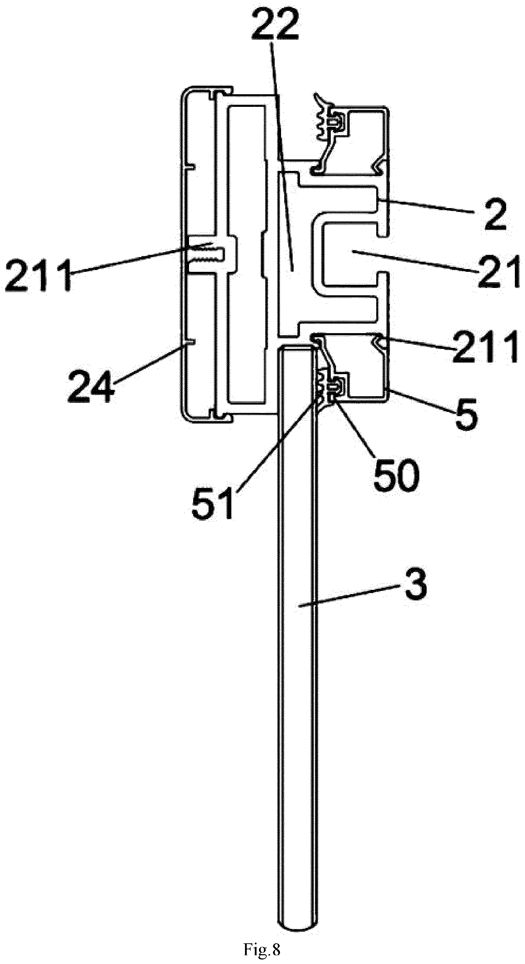

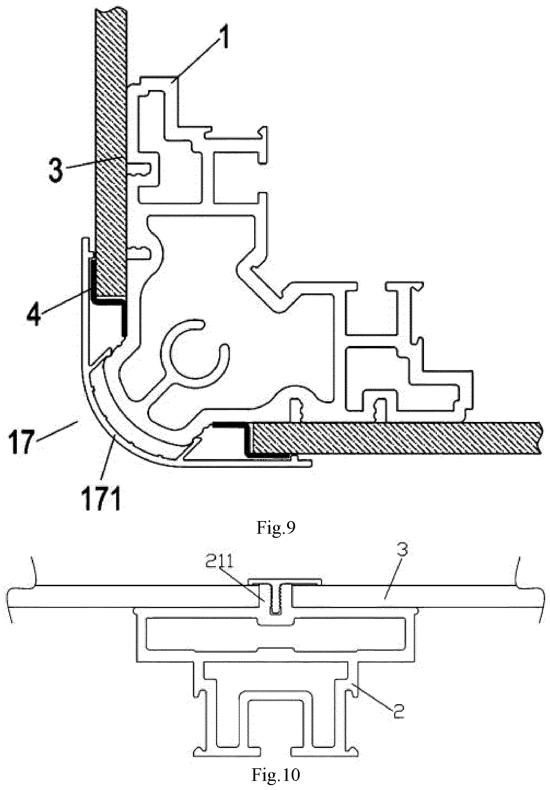

As shown in Fig. 1 to Fig. 10, an installation-facilitated elevator framework of the present disclosure includes a plurality of upper and lower pillars 1 connected to each other and arranged at four corners, and cross beams 2 perpendicularly connected to two adjacent pillars 1 and arranged at joints of the upper and lower pillars 1. Four cross beams 2 are arranged at the joints of the upper and lower pillars 1; the pillars 1 are vertical corner profiles; each vertical corner profile includes two vertical sections 10 that are perpendicular to each other and a bent section 11 that connects the two vertical sections 10; a connection slot 12 is arranged inside the bent section 11; the upper and lower pillars 1 are located by locating columns 13 arranged in the connection slots 12; and the connection slots 12 fix the locating columns 13 in a vertical direction. The inner sides of the bent sections 11 of the vertical corner profiles are provided with fixed beds 14; the fixed beds 14 are flat and straight, and have included angles of 45 degrees to the vertical sections 10; the locating columns 13 are located in the vertical directions of the connection slots 12 through the locking columns passing through the fixed beds 14, so that the locating columns 13 are inserted into the connection slots 12 of the lower pillar, and extend out of the connection slots 12 to be inserted into the connection slots 12 of the upper pillar.

The included angles between the fixed beds 14 and the vertical sections 10 may also be other angles, as long as notches of the connection slots 12 are opposite to the fixed beds 14. However, in consideration of the convenience of installation, a 45-degree angle should be selected, and only vertical perforation needs to be performed on the middle portions of the fixed beds 14 to cause the locking columns to be successfully threaded into the connection slots 12. In consideration of the convenience of perforation, the fixed bed 14 should be flat and straight. If it has a curved surface or a slope, a perforation position is hard to locate, and inclined holes are easy to generate in the perforation process, so that it is hard to ensure that the locking columns are successfully inserted into the connection slots 12 of the pillars. The locking column may be a screw, a stud and a shaft pin. In consideration of the cost and the convenience of use, the screw should be selected. If the stud is used, the relatively large end portion of the stud would occupy the limited volume of the fixed bed 14. If the shaft pin is used, the pin shaft is easily inserted into the connection slot 12 too much to cause the end portion of the shaft pin to be remained in the fixed bed 14 too little, and this cannot well fix the shaft pin.

Further, the fixed beds 14 are sunken at the bent sections 11 towards the inner sides to form clamping slots 15 provided with bayonets at two sides; threading components are fastened on the clamping slots 15 by means of cooperation between clamping claws on two sides and the bayonets. Wires may be accommodated in the fixed beds 14, and the threading components are fastened on the clamping slots 15 to fix the wires, so that the fixed beds 14 can be used as, on one hand, accommodating cavities to facilitate installation of the wires, and can be used as, on the other hand, fixing cavities; and the locating columns 13 are fixed through the locking columns, so that the design is ingenious.

Further, two sides of the inner sides of the vertical sections 10 of the vertical corner profiles are provided with vertical fixing plate slots 101; the inner sides of the cross beams 2 are provided with horizontal fixing plate slots 21; fixing plates 16 are inserted into the vertical fixing plate slots 101 and the horizontal fixing plate slots 21; screw holes are formed in the fixing plates 16; connection corner fittings 161 are connected with the screw holes of the fixing plates 16 going deep into the vertical fixing plate slots 101 and the horizontal fixing plate slots 21, so that the cross beams 2 on both sides and the upper and lower pillars 1 are connected together. The fixing plates 16 are located on the outer sides of the connection corner fittings 161, and the bolts realize fastening outside the profiles. The previous fastening inside the profile is changed, so that the operation space is large, and the installation is convenient.

Further, cavities 22 are formed in the cross beams 2; the cavities 22 are located on the front sides of the horizontal fixing plate slots 21; bolts in the cavities 22 are connected with connection sheets 23; and the end portions of the connection sheets 23 are fixedly connected with the vertical corner profiles through screws.

Further, the pillars 1 and the cross beams 2 are connected to form an elevator framework; a board 3 is embedded on the elevator framework; the board 3 is located on the outer side of the elevator framework; fixing slots 212 are formed in the outer side surfaces of the cross beams 2; the insides of the fixing slots 212 are detachably connected with T-shaped fixing pieces for fixing the end portion of the board in a height direction; one end of each T-shaped fixing piece is inserted into each fixing slot 212, and the other two ends press and cover the end portion of the board in a horizontal direction; the pillars 1 are detachably connected with battens 4 for fixing the end portion of the board in a width direction; one end of each batten 4 is fixedly connected with each pillar 1, and the other end of the batten 4 presses and covers the end portion of the board 1 in the width direction.

The board 3 resists against the pillars 1 and the cross beams 2; the T-shaped fixing pieces are inserted into the fixing slots 212, and the other two ends of the T-shaped fixing pieces press and cover the end portions of the upper and lower boards in the height direction to realize fastened fixing of the board 3 in the horizontal direction; one end of each batten 4 is in bolting connection with the pillars 1, and the other end of the batten 4 presses and covers the end portion of the board 1 in the width direction to realize fastened fixing of the board 3 in the width direction.

Further, the pillars 1 and the cross beams 2 are connected to form an elevator framework; a board 3 is embedded on the elevator framework; when the board 3 is located on the inner side of the elevator framework, two sides of the horizontal fixing plate slots 21 of the cross beams 2 are provided with cross beam clamping bar bayonets 211; the outer sides of the vertical fixing plate slots 101 of the vertical corner profiles are provided with pillar clamping bar bayonets 102; the insides of the cross beam clamping bar bayonets 211 and the pillar clamping bar bayonets 102 are all fastened with installation clamping bars 5; the sides, opposite to the board 3, of the installation clamping bars 5 are provided with fixing bayonets 50 in which flexible bars 51 for fixing the board are fastened; the flexible bars 51 resist against the board.

The board 3 resists against the pillars 1 and the cross beams 2; the flexible bars 51 are fastened on the installation clamping bars 5 at first, and then the entire installation clamping bars 5 and flexible bars 51 are fastened on the cross beams 2, so that the flexible bars 51 are relatively convenient to install.

Further, the pillars 1 are detachably connected with pillar cover plates 17; the pillar cover plates 17 are divided into bent section cover plates 171 and vertical section cover plates 172; and the bent section cover plates 171 are detachably connected with the vertical section cover plates 172, and their connection manners may be screwing connection, bolt connection or fastening connection. In order to ensure the good-looking appearance, the connection manner is preferably the fastening connection. That is, the bent section cover plates 171 are fastened on the vertical section cover plates 172; the bent section cover plates 171 are connected with the bent sections 11 of the vertical corner profiles; bent section cover plate fixing legs of the bent section cover plates 171 hook trenches on the bent sections 11 to realize that the bent section cover plates 171 are fastened on the bent sections 11; the vertical section cover plates 172 are connected with the vertical sections 10 of the vertical corner profiles; and vertical section cover plate fixing legs of the vertical section cover plates 172 hook trenches on the vertical sections 10 to realize that the vertical section cover plates 172 are fastened on the vertical sections 10.

Further, the cross beams 2 are detachably connected with cross beam cover plates 24, and their connection manners may be screwing connection, bolting connection or fastening connection. In order to ensure the good-looking appearance, the connection manner is preferably the fastening connection. Cross beam cover plate fixing legs of the cross beam cover plates 24 hook trenches on the cross beams 2 to realize that the cross beam cover plates 24 are fastened on the cross beams 2.

During assembling of the upper and lower pillars 1, the locating columns 13 are inserted into the connection slots 12 at first, and the end portions of the locating columns are exposed from the upper and lower pillars 1; and then, the connection slot 12 of the upper pillar 1 is aligned with the locating column 13, and the locating column is inserted, so that the pillars 1 can be located conveniently.

When electric wires need to be routed, the threading components can fasten the electric wires into second through slots 12 to facilitate replacement.

The present disclosure has the following beneficial effects.
1. According to the installation-facilitated elevator framework of the present disclosure, by means of disposing the locating columns and the connection slots, the locating columns are inserted into the connection slots, so as to locate the upper and lower pillars and facilitate the installation; by means of disposing the fixed beds, the clamping slots are formed on the fixed beds; wires are fastened on the fixed beds, so that routing is facilitated; the fixed beds are flat and straight, and have the included angles of 45 degrees to the vertical sections; the locating columns are located in the vertical directions of the connection slots through the locking columns passing through the fixed beds; the fixed beds are flat and straight to facilitate perforation; the included angles between the fixed beds and the vertical sections are 45 degrees, so that the locking columns can be conveniently threaded into the connection slots; the fixed beds can be used as, on one hand, accommodating cavities to facilitate installation of the wires, and can be used as, on the other hand, fixing cavities; and the locating columns are fixed through the locking columns, so that the design is ingenious.
2. According to the installation-facilitated elevator framework of the present disclosure, two sides of the inner sides of the vertical sections of the pillars are provided with vertical fixing plate slots; the inner sides of the cross beams are provided with horizontal fixing plate slots; fixing plates are inserted into the vertical fixing plate slots and the horizontal fixing plate slots; screw holes are formed in the fixing plates; connection corner fittings are connected with the screw holes of the fixing plates going deep into the vertical fixing plate slots and the horizontal fixing plate slots, so that the cross beams on both sides and the upper and lower pillars are connected together; the bolts realize fastening outside the profiles; the previous fastening inside the profiles is changed, so that the operation space is large, and the installation is convenient.
3. According to the installation-facilitated elevator framework of the present disclosure, the connection sheets are arranged on the cross beams; and the connection sheets are inserted into the cavities, and the other ends are connected with the pillars through bolts, so that the installation is convenient.
4. According to the installation-facilitated elevator framework of the present disclosure, the pillars are detachably connected with the pillar cover plates, and the cross beams are detachably connected with the cross beam cover plates, so as to form protection to the pillars and the cross beams.

It should be understood that those of ordinary skill in the art can make improvements or transformations according to the above illustrations, and all these improvements and transformations shall fall within the protection scope of the claims appended.

## Claims

1. An installation-facilitated elevator framework, comprising a plurality of upper and lower pillars connected to each other and arranged at four corners, and cross beams perpendicularly connected to two adjacent pillars and arranged at joints of the upper and lower pillars, wherein four cross beams are arranged at the joints of the upper and lower pillars; the pillars are vertical corner profiles; each vertical corner profile include two vertical sections and a bent section that connects the two vertical sections; a connection slot is arranged inside the bent section; the upper and lower pillars are located by locating columns arranged in the connection slots; and the connection slots fix the locating columns in a vertical direction.

2. The installation-facilitated elevator framework according to claim 1, wherein the inner sides of the bent sections of the vertical corner profiles are provided with fixed beds; the fixed beds are flat and straight, and have included angles of 45 degrees to the vertical sections; the locating columns are located in the vertical directions of the connection slots through the locking columns passing through the fixed beds, so that the locating columns are inserted into the connection slots of the lower pillar, and extend out of the connection slots to be inserted into the connection slots of the upper pillar.

3. The installation-facilitated elevator framework according to claim 1, wherein the fixed beds are sunken at the bent sections towards the inner side to form clamping slots provided with bayonets at two sides, and threading components are fastened on the clamping slots by means of cooperation between clamping claws on two sides and the bayonets.

4. The installation-facilitated elevator framework according to claim 1, wherein two sides of the inner sides of the vertical sections of the vertical corner profile are provided with vertical fixing plate slots; the inner sides of the cross beams are provided with horizontal fixing plate slots; fixing plates are inserted into the vertical fixing plate slots and the horizontal fixing plate slots; screw holes are formed in the fixing plates; connection corner fittings are connected with the screw holes of the fixing plates going deep into the vertical fixing plate slots and the horizontal fixing plate slots, so that the cross beams on both sides and the upper and lower pillars are connected together.

5. The installation-facilitated elevator framework according to claim 4, wherein cavities are formed in the cross beams; the cavities are located on the front sides of the horizontal fixing plate slots; bolts in the cavities are connected with connection sheets; and the end portions of the connection sheets are fixedly connected with the vertical corner profiles through screws.

6. The installation-facilitated elevator framework according to claim 1, wherein the pillars and the cross beams are connected to form an elevator framework; a board is embedded on the elevator framework; the board is located on the outer side of the elevator framework; fixing slots are formed in the outer side surfaces of the cross beams; the insides of the fixing slots are detachably connected with T-shaped fixing pieces for fixing the end portion of the board in a horizontal direction; one end of each T-shaped fixing piece is inserted into each fixing slot, and the other two ends press and cover the end portion of the board in a height direction; the pillars are detachably connected with battens for fixing the end portion of the board in a width direction; one end of each batten is fixedly connected with each pillar, and the other end of the batten presses and covers the end portion of the board in the width direction.

7. The installation-facilitated elevator framework according to claim 1, wherein the pillars and the cross beams are connected to form an elevator framework; a board is embedded on the elevator framework; when the board is located on the inner side of the elevator framework, two sides of the horizontal fixing plate slots of the cross beams are provided with cross beam clamping bar bayonets; the outer sides of the vertical fixing plate slots of the vertical corner profiles are provided with pillar clamping bar bayonets; the cross beam clamping bar bayonets and the pillar clamping bar bayonets are all fastened with installation clamping bars; the sides, opposite to the board, of the installation clamping bars are provided with fixing bayonets in which flexible bars for fixing the board are fastened; and the flexible bars resist against the board.

8. The installation-facilitated elevator framework according to claim 1, wherein the pillars are detachably connected with pillar cover plates; the pillar cover plates are divided into bent section cover plates and vertical section cover plates; the bent section cover plates are detachably connected with the vertical section cover plates; the bent section cover plates are connected with the bent sections of the vertical corner profiles; and the vertical section cover plates are connected with the vertical sections of the vertical corner profiles.

9. The installation-facilitated elevator framework according to claim 1, wherein the cross beams are detachably connected with cross beam cover plates.
